# EUROPÄISCHE PATENTSCHRIFT

(11) **EP 3 050 828 B1**
(45) Veröffentlichungstag und Bekanntmachung des Hinweises auf die Patenterteilung: **10.10.2018**
(21) Anmeldenummer: 15200788.6
(22) Anmeldetag: 17.12.2015
(51) Int. Cl.: B65G 17/20, B65G 19/02

(54) **FÖRDERELEMENT FÜR HÄNGEWARENFÖRDERANLAGEN**
CONVEYING ELEMENT FOR CONVEYOR SYSTEMS FOR SUSPENDED GOODS
ÉLEMENT DE TRANSPORT POUR DES INSTALLATIONS DE TRANSPORT DE MARCHANDISES SUSPENDUES

(30) Priorität: 19.12.2014 DE 102014226600
(43) Veröffentlichungstag der Anmeldung: 03.08.2016
(73) Patentinhaber: Vanderlande Industries B.V., 5466 RB Veghel (NL)
(72) Erfinder: Schneuing, Ralf Ferdinand, 33649 Bielefeld (DE)
(74) Vertreter: Hoffmann Eitle

(56) Entgegenhaltungen:
- EP-A1- 0 802 132
- EP-A1- 2 385 002
- DE-A1- 4 411 877
- US-A- 2 449 669
- US-A- 4 817 780
- US-B1- 6 415 907

## Beschreibung

### TECHNISCHES GEBIET

Die vorliegende Erfindung betrifft eine Hängewarenförderanlage nach dem Oberbegriff des Anspruchs 1.

### STAND DER TECHNIK

Förderelemente für Hängewarenförderanlagen sind grundsätzlich aus dem Stand der Technik bekannt, beispielsweise aus DE 202 03 344 U1. Bei Hängewarenförderanlagen wird die zu fördernde Ware hängend gefördert. Hierbei gibt es grundsätzlich zwei verschiedene Systeme, nämlich einerseits ein erstes System, bei dem die Hängeware auf einem Tragelement aufliegt, das selbst gefördert wird. Hier nimmt das Tragelement, das zum Fördern der Hängeware genutzt wird, zumindest teilweise auch die Gewichtskraft der Hängeware auf.

EP 2 385 002 A1 offenbart eine Hängewarenförderanlage nach dem Oberbegriff des Anspruchs 1, bei der die zu fördernde Ware hängend gefördert wird, wobei die Ware an einem Rollläufer oder Gleitläufer hängt, der von einem Mitnehmer über eine Schiene bewegt wird.

Ein hiervon grundsätzlich verschiedenes zweites System, auf das sich auch die vorliegende Erfindung bezieht, nutzt eine Gleitauflage, beispielsweise eine Gleitschiene, zur Aufnahme der Gewichtskraft der Hängeware, während die Hängeware mithilfe eines Förderelements über die Schiene geschoben oder gezogen wird. Bei Systemen dieser zweiten Art gibt es wiederum verschiedene Ausprägungen, die Auswirkungen auf die hierfür einzusetzenden Förderelemente haben.

Beispielsweise existieren Förderanlagen, mit denen viele meistens gleichartige Hängewareprodukte gemeinsam über die Anlage transportiert werden. Hierbei ist es unerheblich, in welcher Reihenfolge die Hängewareprodukte gefördert werden und die Anforderungen an eine Automatisierung einer solchen Anlage sind verhältnismäßig niedrig.

Hiervon zu unterscheiden sind Einzelförderanlagen, durch die jeweils Einzelteile, d.h. individuell unterschiedliche Teile, transportiert werden. Solche Anlagen stellen insbesondere an das Sortieren der Hängeware hohe Anforderungen. Sie sind für viele moderne Anwendungen von großer Bedeutung, denn häufig ist es erforderlich, eine Vielzahl verschiedener Hängewareprodukte über dieselbe Hängewarenförderanlage zu fördern. Ein Beispiel einer Anwendung für solche Hängewarenförderanlagen des zweiten Typs ist der Onlinehandel, wo im Gegensatz zu Förderanlagen für große Kaufhäuser nicht große Mengen gleichartiger Hängewarenprodukte transportiert werden, sondern je nach Bestelleingang individuelle Mengen und völlig ungeordnete Reihenfolgen der einzelnen Teile bewegt werden müssen.

Grundsätzlich existieren für Hängewarenförderanlagen des zweiten Typs, also solche, bei denen die Hängeware über eine Schiene gefördert wird, verschiedene Ansätze, die Hängeware auf die Schiene zu bringen und von ihr abzunehmen. Um dies vollautomatisch durchführen zu können, stellt die Förderanlage bestimmte Randbedingungen an die Hängeware, die jedoch möglichst vermieden werden sollten, um die Förderanlage möglichst allgemein nutzen zu können.

Insbesondere für das Entnehmen der Hängewaren von einer Hauptschiene einer Förderanlage und Überleiten auf eine seitlich abzweigende Nebenschiene, beispielsweise zum Sortieren der Hängeware, besteht einerseits die Möglichkeit, durch ein Verstellelement in der Hauptschiene einzelne Teile nach unten aus der Hauptschiene herausgleiten zu lassen, um sie auf von dort entweder nach links oder nach rechts von der Hauptschiene auf einer Nebenschiene weiterzufördern.

Alternativ besteht die Möglichkeit, die Hängeware von der Hauptschiene zunächst nach oben zu führen und dann zur Seite auf eine Nebenschiene weiterzuführen. Beide Möglichkeiten haben ihre Vor- und Nachteile.

Abhängig von einer Form einer Tragvorrichtung, beispielsweise eines Kleiderbügels, an dem die Hängeware auf der Schiene aufliegt, können die von der Hauptschiene abzweigenden Nebenschienen der auf der Hauptschiene geförderten Ware im Weg sein. Dies ist besonders bei weit ausladenden Spannbügeln für Hosen oder ähnliches von Bedeutung. Ferner kann aufgrund der üblichen Form eines Bügelhakens, mit dem die Hängeware auf der Schiene aufliegt, beim Entnehmen nach oben nur in eine Richtung weitergeführt werden, weil der Bügelhaken nur auf einer Seite geöffnet ist.

Wie die Hängeware von der Schiene entnommen wird, bestimmt maßgeblich die Auswahl von zur Verfügung stehenden Förderelementen, durch welche die Hängeware über die Schiene gefördert wird. Bisher bekannte Förderelemente bestimmten also, ob die Hängeware die Schiene nach oben oder nach unten verlassen kann, was große Auswirkungen auf die Planung und Auslegung der Förderanlage hat.

Beispielsweise die oben genannten Anlagen des ersten Typs, bei denen die Hängeware auf einem Tragelement aufliegt, ist ein Abnehmen nach unten mit den üblichen Mechanismen nicht möglich. Auf der anderen Seite ist es mit den bisher bekannten Fördereinrichtungen, mit denen Hängeware über eine Schiene geschoben wird, nicht zuverlässig möglich, die Hängeware nach oben zu entnehmen. Dies bedeutet, dass für bestimmte Hängeware bestimmte Förderelemente und für diese Förderelemente eine bestimmte Auslegung der Förderanlage vorbestimmt sind.

### DARSTELLUNG DER ERFINDUNG

Vor dem Hintergrund dieses Standes der Technik liegt die Aufgabe der vorliegenden Erfindung darin, ein Förderelement des obigen technischen Gebiets bereitzustellen, durch welches eine Hängewarenförderanlage vielseitiger einsetzbar und leichter planbar ist als im Stand der Technik. Insbesondere besteht eine Aufgabe der vorliegenden Erfindung darin, ein Förderelement aus dem obigen technischen Gebiet bereitzustellen, das hinsichtlich der Entnahme der Hängeware von der Schiene weniger Einschränkungen unterliegt als der Stand der Technik. Vorzugsweise soll es durch die vorliegende Erfindung möglich sein, an einer Hängewarenförderanlage geförderte Hängeware bei vollautomatischem Betrieb der Förderanlage sowohl nach oben als auch nach unten von der Schiene zu entnehmen.

Die Lösung der Aufgabe wird durch den Gegenstand des vorliegenden Anspruchs 1 bereitgestellt. Vorteilhafte Weiterführungen der Erfindung ergeben sich aus den Unteransprüchen.

Eine erfindungsgemäße Hängewarenförderanlage ist dazu ausgestaltet, an einer Aufhängung auf einer Schiene hängende Hängeware entlang einer Förderrichtung über die Schiene zu bewegen, und umfasst einen ersten Vorsprung, durch den die Aufhängung der Hängeware an einer ersten Anschlagsfläche kontaktierbar und über die Schiene mitnehmbar ist. Der erste Vorsprung ist so geformt und bemessen, dass die Aufhängung während eines Aufwärtsverschiebens der Aufhängung entlang zumindest eines Abschnitts der ersten Anschlagsfläche an zumindest zwei horizontal beabstandeten Stellen an der ersten Anschlagsfläche gleichzeitig kontaktierbar ist. Dies kann beispielsweise dadurch erreicht werden, dass die erste Anschlagsfläche zumindest abschnittweise plan ist. Der erste Vorsprung steht von einer Basis des Förderelements aus bis zu einer ersten Spitze um eine erste Länge vor, die senkrecht zur Förderrichtung definiert ist, wenn das Förderelement an der Hängewarenförderanlage angebracht ist. Das Förderelement umfasst ferner einen zweiten Vorsprung, der in Förderrichtung vor dem ersten Vorsprung angeordnet ist. Der zweite Vorsprung steht dabei von der Basis des Förderelements aus bis zu einer zweiten Spitze um eine zweite Länge vor, die senkrecht zur Förderrichtung definiert ist, wenn das Förderelement an der Hängewarenförderanlage angebracht ist. Die zweite Länge ist kürzer als die erste Länge, wobei sich die erste Anschlagsfläche in einem Abschnitt, in dem die Aufhängung während eines Aufwärtsverschiebens der Aufhängung entlang des Abschnitts der ersten Anschlagsfläche an zumindest zwei horizontal beabstandeten Stellen an der ersten Anschlagsfläche gleichzeitig kontaktierbar ist, verjüngt.

Vorliegend ist grundsätzlich unter einem Förderelement, das an der Hängewarenförderanlage angebracht ist, ein Förderelement in einem Zustand zu verstehen, in dem eine funktionsfähige Anordnung und Befestigung des Förderelements an der Hängewarenförderanlage realisiert wurde.

Unter der oben genannten Aufhängung ist insbesondere ein Haken eines Kleiderbügels oder ein Haken einer Transporttasche zu verstehen. Mit dieser Aufhängung wird die Gewichtskraft der Hängeware auf die Schiene übertragen. Die Aufhängung muss dann nur noch von der Fördervorrichtung, insbesondere dem Förderelement, über die Schiene geschoben werden. Die Aufhängung hat dabei normalerweise die Form eines offenen, gekrümmten Hakens, der in die Schiene eingreifen kann, um die Hängeware an die Schiene zu hängen. Durch die Abmessung der Schiene ist eine Mindestgröße der Aufhängung definiert. Die Aufhängung muss so bemessen und geformt sein, dass sie die Schiene umgreifen oder zumindest in die Schiene eingreifen und entlang der Schiene geschoben werden kann. Um die Hängeware von der Schiene abzunehmen, kann die Aufhängung über ein Verstellelement in der Schiene, das sich beispielsweise wie eine Falltür nach unten öffnen lässt, nach unten herausgleiten und nach links oder rechts bezüglich der Schiene weitergefördert werden. Alternativ kann die Aufhängung beispielsweise über eine Schwenkabgabe über die Oberkante der Schiene angehoben werden, so dass sie zu einer von der Ausrichtung der Aufhängung abhängigen Richtung von der Schiene entnommen werden kann. Im Fall eines Hakens mit in Förderrichtung links geführtem Draht kann der Haken nach links, nicht jedoch nach rechts von der Schiene abgenommen werden, weil einem Abnehmen nach rechts der Draht des Hakens im Weg wäre, wenn die Hängeware nach oben angehoben wird statt nach unten herauszugleiten.

Unter einer zumindest abschnittweise planen Anschlagsfläche ist erfindungsgemäß eine Fläche zu verstehen, die keine konkave oder konvexe Wölbung, insbesondere in einer horizontalen Ebene, hat. Bei herkömmlichen Stiftförderern, bei denen ein oder mehrere Vorsprünge in Form von kreiszylindrischen Stiften von einem Förderelement in Richtung einer Schiene vorstehen und welche die Aufhängung der Hängeware vor sich her schieben, ist die Anschlagsfläche in der horizontalen Ebene stark konvex gekrümmt, wobei die Krümmung oder Wölbung der Anschlagsfläche stärker ausgeprägt ist als eine Krümmung einer üblichen Aufhängung, beispielsweise eines Kleiderbügelhakens. Dies führt beim Entnehmen der Hängeware nach oben dazu, dass sich die Hängeware sehr leicht in eine unvorhersehbare Richtung dreht und dann nicht mehr zuverlässig vollautomatisch von der Hängewarenförderanlage entnommen werden kann. Denn durch das Anheben der Aufhängung von der Schiene, wobei die Aufhängung entlang des Stiftes verschoben wird, geht der Kontakt zwischen der Schiene und der Aufhängung verloren, so dass die Aufhängung nur noch ein-punktuell von dem Stiftförderer und einer filigranen Schwenkabgabe oder einem ähnlichen Element gehalten wird. Dies vermindert die Richtungsstabilität der Hängeware in Bezug auf Drehungen um ihre Hochachse sehr.

Durch die Ausgestaltung des ersten Vorsprungs, so dass die Aufhängung während eines Aufwärtsverschiebens der Aufhängung entlang zumindest eines Abschnitts der ersten Anschlagsfläche an zumindest zwei horizontal beabstandeten Stellen an der ersten Anschlagsfläche gleichzeitig kontaktierbar ist, kann sichergestellt werden, dass sich die Hängeware nicht ohne weiteres um ihre Hochachse dreht, sodass ein zuverlässiges Entnehmen auch nach oben bei dem erfindungsgemäßen Förderelement möglich ist. Denn durch das gleichzeitige Kontaktieren durch zumindest zwei horizontal beabstandete Stellen an der ersten Anschlagsfläche werden bei äußeren Störungen, also Krafteinwirkungen, die eine Drehung der Hängeware um die Hochachse bewirken, entsprechende Rückstellkräfte erzeugt und somit ein stabiler Zustand eingenommen.

Beispielsweise im Fall einer planen Ausgestaltung der Anschlagsfläche kann sichergestellt werden, dass sich die Hängeware nicht ohne weiteres um ihre Hochachse dreht, sodass ein zuverlässiges Entnehmen auch nach oben bei dem erfindungsgemäßen Förderelement möglich ist. Denn die plane Anschlagsfläche bietet im Gegensatz zu einer stark konvex gewölbten Anschlagsfläche Richtungsstabilität für die Aufhängung.

In diesem Zusammenhang ist auch eine in der horizontalen Ebene konkave Ausgestaltung der Anschlagsfläche grundsätzlich denkbar, wenn auch nicht bevorzugt. Hinsichtlich der Verhinderung des Sich-Wegdrehens der Hängeware ist auch eine in der horizontalen Ebene konkave Wölbung der Anschlagsfläche grundsätzlich geeignet, weil diese gleichzeitig zwei horizontal beabstandete Kontaktpunkte mit der Aufhängung erlaubt, so dass Richtungsstabilität gewährleistet ist.

Eine sehr leicht konvex gewölbte Anschlagsfläche kann auch an zwei horizontal beabstandeten Stellen gleichzeitig Kontakt mit der Aufhängung herstellen, wenn der der konvexen Wölbung entsprechende Krümmungsradius größer als derjenige ist, der eine effektive Krümmung der Aufhängung in einer horizontalen Ebene und in ihrem die Anschlagsfläche kontaktierenden Abschnitt definiert. Die konkave oder leicht konvexe Ausgestaltung ist jedoch gegenüber einer planen Ausgestaltung mit erhöhtem Herstellungsaufwand verbunden und daher wird die plane Ausgestaltung bevorzugt.

Der Effekt des Verhinderns des Sich-Wegdrehens der Hängeware kann auch durch einen mehrteiligen ersten Vorsprung erzielt werden, bei dem zwei nebeneinander angeordnete Stifte oder ähnliche Elemente zusammenwirken, um eine mehrteilige Gesamt-Anschlagsfläche zu bilden, so dass die Aufhängung während des Aufwärtsverschiebens der Aufhängung entlang zumindest eines Abschnitts der ersten Anschlagsfläche an zumindest zwei horizontal beabstandeten Stellen an der ersten Anschlagsfläche gleichzeitig kontaktierbar ist.

Durch die erfindungsgemäße Ausgestaltung des Förderelements kann die Hängeware nach unten entnommen werden. Dies kann wie im Stand der Technik üblich geschehen. Darüber hinaus ist es möglich, bei Verwendung desselben Förderelements auch ein zuverlässiges, vollautomatisches Entnehmen der Ware nach oben zu realisieren, weil die Hängeware sich nicht mehr ohne weiteres gegenüber dem ersten Vorsprung des Förderelements drehen kann. Damit ist sichergestellt, dass die zu entnehmende Hängeware beispielsweise auf einer Nebenschiene sicher aufgesetzt und weitergefördert werden kann. Somit kann durch das erfindungsgemäße Förderelement ein Entnehmen der Hängeware sowohl nach unten als auch nach oben erfolgen, was die Flexibilität der Hängewarenförderanlage erheblich vergrößert und ihre Planung erleichtert. Zudem ist es nicht mehr erforderlich, verschiedene Förderelemente für verschiedene Entnahmevarianten vorzuhalten.

Bevorzugt verjüngt sich der erste Vorsprung von einer Basis des Förderelements aus zu einer ersten Spitze, insbesondere verjüngt sich der erste Vorsprung von der Basis bis zur ersten Spitze durchgehend. Hierbei ist eine Verjüngung quer zur Förderrichtung oder mit zumindest einer Komponente quer zur Förderrichtung gemeint.

Die Basis des Förderelements ist im vorliegenden Zusammenhang der im eingebauten Zustand obere Teil des Förderelements. In diesem Bereich findet eine Ankopplung des Förderelements an einen Förderträger oder an die Förderkette statt, wodurch das Förderelement angetrieben wird. Da die Schiene, auf der die Hängeware bewegt wird, unterhalb der Förderkette verläuft, erstreckt sich der erste Vorsprung im eingebauten Zustand des Förderelements von der Förderkette nach unten in Richtung der Schiene. Die erste, auch mehrteilig ausführbare, Spitze kann dabei bevorzugt in die Schiene hineinragen, vor allem wenn die Schien ein U- oder L-Profil hat. Von der Basis zur ersten Spitze, im eingebauten Zustand also von oben nach unten, verjüngt sich der erste Vorsprung, sodass er in einer Vorderansicht in der Förderrichtung ein dreieckförmiges oder trapezförmiges Profil hat. Mit anderen Worten verbreitert sich also der erste Vorsprung von der Spitze im Bereich der Schiene in Richtung der Basis im Bereich der Förderkette, so dass sich auch ein horizontaler Abstand der Stellen vergrößert, an denen die Aufhängung an der ersten Anschlagsfläche gleichzeitig kontaktierbar ist.

Diese Ausgestaltung des ersten Vorsprungs verstärkt den positiven Effekt der vorzugsweise zumindest abschnittweise plan ausgebildeten ersten Anschlagsfläche. Denn die hieraus resultierende Verbreiterung des ersten Vorsprungs, oder Vergrößerung des Abstands der zumindest zwei horizontal beabstandeten Stellen, nach oben führt dazu, dass nach oben entnommene Hängeware sich nur noch wesentlich schwerer um ihre Hochachse drehen kann, verglichen mit einer durchgehend schmalen, planen Anschlagsfläche. Auf diese Weise kann also insbesondere das vollautomatische Entnehmen der Hängeware nach oben, noch zuverlässiger durchgeführt werden.

Die erste Anschlagsfläche verjüngt sich in einem Abschnitt, in dem sie plan ist. Da die Anschlagsfläche den größten Einfluss auf ein mögliches Sich-Wegdrehen der Hängeware hat, wird besonders bevorzugt, diese erste Anschlagsfläche von der Spitze in Richtung der Basis verbreitert auszuführen oder, mit anderen Worten, von der Basis des Förderelements aus zu der ersten Spitze des Vorsprungs zu verjüngen. Zwar wird der oben beschriebene vorteilhafte Effekt des sich Verjüngens grundsätzlich auch erzielt, wenn der erste Vorsprung sich in einem anderen Bereich als der eigentlichen Anschlagsfläche verjüngt bzw. je nach Blickrichtung verbreitert, weil die Aufhängung auch mit anderen Teilen des Vorsprungs in Kontakt geraten kann, wenn er sich dreht. Ein Verjüngen/Verbreitern der Anschlagsfläche selbst hat jedoch einen größeren Einfluss auf die Ausrichtung der zu entnehmenden Hängeware und ist daher effektiver.

Bevorzugt ist die erste Anschlagsfläche senkrecht zur Förderrichtung ausgerichtet, wenn das Förderelement an der Hängewarenförderanlage angebracht ist. Eine senkrechte Ausrichtung der ersten Anschlagsfläche gegenüber der Förderrichtung führt dazu, dass der Entnahmevorgang der Hängeware beispielsweise über eine Schwenkabgabe besonders flexibel ausgestaltet sein kann. Eine so ausgerichtete Anschlagsfläche ermöglicht also einen vielseitigen Einsatz des Förderelements und daher eine leichtere Planung der Förderanlage. Eine möglicherweise in bestimmten Einbausituationen vorteilhafte Neigung der Anschlagsfläche kann in anderen Einbausituationen nachteilig sein. Die senkrechte Ausrichtung der Anschlagsfläche ist in diesem Zusammenhang zu bevorzugten, weil sie diesbezüglich neutral ist.

Der erste Vorsprung steht von der Basis des Förderelements aus bis zu der ersten Spitze um eine erste Länge vor, die senkrecht zur Förderrichtung definiert ist, wenn das Fördererelement an der Hängewarenförderanlage angebracht ist.

Bevorzugt korreliert die Länge, um die sich der erste Vorsprung von der Basis erstreckt, mit der üblichen Größe einer Aufhängung, insbesondere eines Kleiderbügelhakens oder eines Hakens für eine Fördertasche, und erlaubt es, dass die Aufhängung von der Schiene gehoben werden kann, ohne dabei an der Basis oder einem anderen Teil des Förderelements anzustoßen. Für alle üblichen Kleiderbügel und entsprechenden Haken wird bevorzugt, dass die erste Länge zwischen 30 mm und 40 mm, insbesondere etwa 35 mm beträgt.

Ferner umfasst das Förderelement einen zweiten Vorsprung, der in Förderrichtung vor dem ersten Vorsprung angeordnet ist. Der zweite Vorsprung hat insbesondere den Vorteil, dass das Förderelement besonders leicht als Einzelfördererelement eingesetzt werden kann. Dabei ist unter einem Einzelförderelement ein Förderelement zu verstehen, mit dem ein einzelnes Objekt der Hängeware transportiert wird. Durch geeignete Form und Ausgestaltung des zweiten Vorsprungs in Bezug auf den ersten Vorsprung kann zwischen dem ersten Vorsprung und dem zweiten Vorsprung ein definierter Raum oder Streckenabschnitt abgeschlossen sein, in dem sich nur ein einziges Hängewarenprodukt befindet. Dies hat steuerungstechnisch erhebliche Vorteile, weil genau definierte Abstände zwischen aufeinander folgenden Hängewarenprodukten eingehalten und sichergestellt werden können. Dies erleichtert es vor allem, eine vollautomatische Sortierung der Hängeware durchzuführen.

Der zweite Vorsprung steht von der Basis des Förderelements aus bis zu einer zweiten Spitze um eine zweite Länge vor, die senkrecht zur Förderrichtung definiert ist, wenn das Förderelement an der Hängewarenförderanlage angebracht ist, wobei diese zweite Länge kürzer als die erste Länge ist. Die erste Länge ist die Länge des ersten Vorsprungs, wie sie oben beschrieben wurde. Bevorzugt ist die zweite Länge 5 mm kürzer als die erste Länge, insbesondere höchstens 25 mm bis 35 mm, bevorzugt etwa 30 mm.

Dadurch, dass die zweite Länge, also die Länge des zweiten Vorsprungs, gegenüber der ersten Länge, also der Länge des ersten Vorsprungs, kürzer ist, kann die Hängeware besonders einfach in eine relativ genau definierte Position gebracht werden, ohne dabei einen großen steuerungstechnischen Aufwand treiben zu müssen. Das nachfolgend beschriebene Positionierverfahren lässt sich durch die bevorzugte Ausführungsform des Förderelements durchführen.

Zwischen aufeinanderfolgenden Förderelementen besteht bevorzugt ein Abstand von 150 mm bis 300 mm, häufig etwa 250 mm. Eine diesem Abstand entsprechende Strecke steht für das Auflegen der Hängeware auf die Schiene zur Verfügung, um die Hängeware sicher vor einem bestimmten Förderelement zu positionieren. Die Hängeware kann dann zunächst von dem zweiten Vorsprung vor sich hergeschoben werden, bis eine Ausnehmung in der Schiene erreicht wird, in welche die Aufhängung hineinfällt. Bei der bevorzugten Ausführungsform des Förderelements wird die Aufhängung der Hängeware zunächst vom zweiten, kürzeren Vorsprung überfahren und dann vom ersten, längeren Vorsprung mitgenommen. Somit kann die Aufhängung der Hängeware über eine relativ große Strecke vor dem Förderelement auf die Schiene aufgesetzt werden, was den steuerungstechnischen Aufwand für das Synchronisieren von aufzusetzender Hängeware und Förderelement gering hält. Trotzdem wird die Hängeware durch die bevorzugte Ausführungsform des Förderelements dann automatisch zwischen den ersten Vorsprung und den zweiten Vorsprung positioniert und befindet sich somit an einem sehr genau definierten Ort, was für die weitere Verarbeitung der Hängeware große Vorteile mit sich bringt.

In einer alternativen bevorzugten Ausführungsform ist der zweite Vorsprung elastisch oder gelenkig ausgebildet und lässt sich in Richtung des ersten Vorsprungs, d.h. entgegen der Förderrichtung des Förderelements, verbiegen oder gelenkig bewegen. Gemäß dieser Ausgestaltung kann die Hängeware durch den zweiten Vorsprung auch ohne Ausnehmung in der Schiene überfahren und somit zwischen dem ersten Vorsprung und dem zweiten Vorsprung eingefangen werden, weil der zweite Vorsprung nach hinten wegklappen oder sich nach hinten wegbiegen lässt, beispielsweise wenn die zum Schieben der Hängeware erforderliche Kraft einen durch die Ausgestaltung des zweiten Vorsprungs bestimmten Wert übersteigt.

Bevorzugt schließt der zweite Vorsprung in einem Bereich einer zweiten Spitze mit der Förderrichtung einen spitzen Winkel ein. Dabei weist der zweite Vorsprung zumindest in dem Bereich der zweiten Spitze an seiner in Förderrichtung vorne liegenden Seite eine zweite Anschlagsfläche auf.

Unter einem spitzen Winkel ist in diesem Zusammenhang ein Winkel außer parallel und senkrecht zur Förderrichtung gemeint. Insbesondere kann die zweite Spitze des zweiten Vorsprungs einen Winkel von 30 Grad, 45 Grad oder 60 Grad mit der Förderrichtung einschließen. Dabei ist die Spitze des zweiten Vorsprungs bevorzugt in Förderrichtung nach hinten, das heißt auf den ersten Vorsprung zu geneigt.

Durch die oben beschriebene Neigung des zweiten Vorsprungs gegenüber der Förderrichtung wird ermöglicht, dass die Aufhängung der Hängeware im Zusammenhang mit dem zuvor beschriebenen Positionierverfahren besonders leicht in eine Ausnehmung in der Schiene hineinfallen kann, sobald die Ausnehmung erreicht wird. Durch die schräge Ausführung des zweiten Vorsprungs, insbesondere der zweiten Anschlagsfläche, ist eine Kraftkomponente der von dem Förderelement auf die Aufhängung übertragenen Kraft nach unten gerichtet, sodass die Aufhängung in die Ausnehmung hineingedrückt wird. Alternativ kann der zweite Vorsprung, insbesondere seine Vorderfläche, aber auch senkrecht zur Förderrichtung ausgebildet sein.

Mit Vorteil ist das Förderelement dazu ausgestaltet, lösbar, insbesondere mittels einer Steckverbindung, an einem Förderträger der Hängewarenförderanlage angebracht zu werden. Auf diese Weise kann die Planung der Hängewarenförderanlage weiter erleichtert werden und auch der mögliche Einsatzbereich des Förderelements wird breiter. Denn durch die lösbare Anbringbarkeit des Förderelements an der Hängewarenförderanlage ist es zunächst möglich, nur das Förderelement auszutauschen und einen möglicherweise vorhandenen Förderträger oder die Förderkette beizubehalten, was zu Kostenersparnis im Fall eines gewünschten Austauschs des Förderelements führt. Die Steckverbindung als bevorzugte Variante der lösbaren Anbringung ermöglicht dabei ein besonders effizientes und schnelles Anbringen bzw. Abnehmen des Förderelements an bzw. von der Hängewarenförderanlage, insbesondere einem Förderträger, an dem das Förderelement angebracht werden soll.

In einer bevorzugten Ausführungsform weist das Förderelement ein elektronisch auslesbares Identifikationsmittel, insbesondere einen über Nahfeldkommunikation auslesbaren integrierten Schaltkreis wie einen RFID Chip, oder ein optisch auslesbares Identifikationsmittel, insbesondere einen eindimensionalen oder mehrdimensionalen Strichcode (Barcode), auf. Somit ist es möglich, eine besonders exakte Steuerung oder auch Regelung der Position des Förderelements durchzuführen, so dass die Hängewarenförderanlage sowohl präziser arbeiten kann, als auch eine gesteigerte Fördermenge fördern kann.

Gemäß einem weiteren Aspekt betrifft die Erfindung eine Hängewarenförderanlage mit einem Förderelement, wie es vorstehend beschrieben wurde.

Weitere Merkmale und Vorteile der Erfindung ergeben sich aus der nachfolgenden Figurenbeschreibung und der Gesamtheit der Patentansprüche.

### KURZE FIGURENBESCHREIBUNG

Fig. 1 zeigt eine Seitenansicht einer bevorzugten Ausführungsform eines Förderelements.
Fig. 2 zeigt eine Vorderansicht des Förderelements aus Fig. 1.
Fig. 3 zeigt eine Draufsicht des Förderelements aus Fig. 1.
Fig. 4 zeigt eine seitliche Schnittansicht des Förderelements aus Fig. 1 entlang der Linie A-A in Fig. 3.
Fig. 5 zeigt eine perspektivische Ansicht des Förderelements aus Fig. 1.

### WEGE ZUR AUSFÜHRUNG DER ERFINDUNG

In den nachfolgend beschriebenen Figuren sind dieselben Elemente mit denselben Bezugszeichen versehen, sodass auf eine wiederholende Beschreibung dieser Elemente weitgehend verzichtet wird.

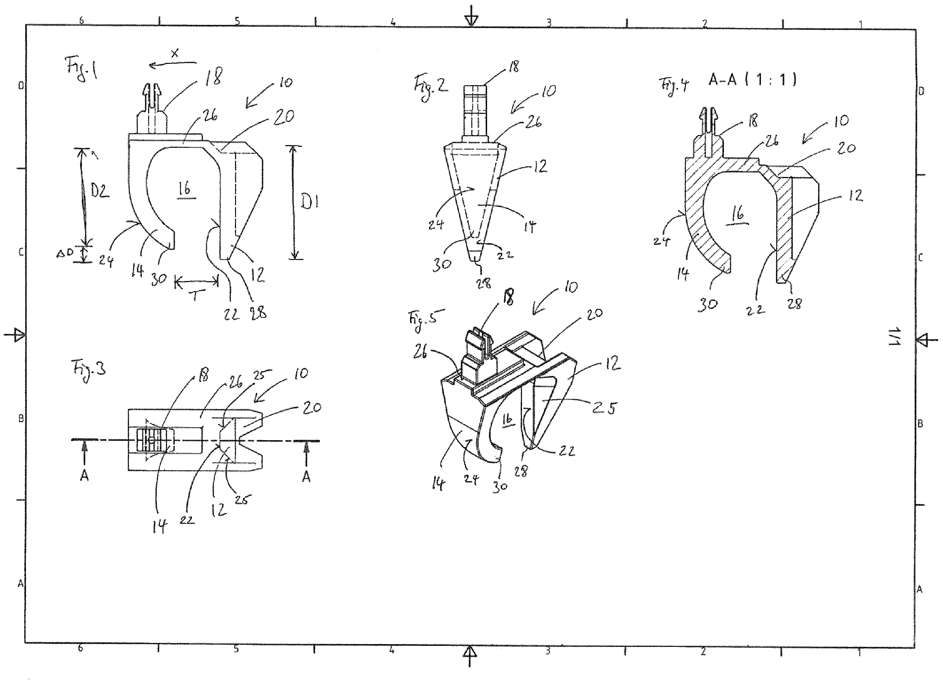

In Fig. 1 ist eine bevorzugte Ausführungsform des Förderelements 10 in einer Seitenansicht gezeigt. Das Förderelement 10 weist einen ersten Vorsprung 12 und einen zweiten Vorsprung 14 auf, die sich beide von einer Basis 26 aus nach unten erstrecken. Dabei erstreckt sich der erste Vorsprung 12 von der Basis 26 zu einer Spitze 28 senkrecht nach unten. Die Ausrichtung des Förderelements 10 in Fig. 1 entspricht der Ausrichtung, die das Förderelement 10 auch einnimmt, wenn es an einer Hängewarenförderanlage zum Fördern von Hängeware angebracht ist. Fig. 1 zeigt dabei auch eine Förderrichtung X, entlang der das Förderelement 10 zum Fördern der Hängeware durch die Hängewarenförderanlage verfahren wird. Die senkrechte Ausrichtung des ersten Vorsprungs 12 von der Basis 26 zur ersten Spitze 28 ist liegt also auch senkrecht zur Förderrichtung X.

In Förderrichtung vor dem ersten Vorsprung 12 erstreckt sich auch der zweite Vorsprung 14 von der Basis 26 nach unten zu einer zweiten Spitze 30. Der zweite Vorsprung 14 ist dabei vorzugsweise gebogen, sodass er im Bereich der zweiten Spitze 30 einen spitzen Winkel von etwa 30 Grad mit der Förderrichtung X einschließt. Da die Förderrichtung X parallel zur Ausrichtung einer in den Figuren nicht gezeigten Schiene verläuft, auf der die Hängeware mittels einer Aufhängung, insbesondere eines Hakens eines Kleiderbügels oder eines Hakens einer Fördertasche, ruht und mittels des Förderelements 10 bewegt wird, schließt also der Bereich der zweiten Spitze 30 des zweiten Vorsprungs 14 auch mit der Schiene einen spitzen Winkel ein. Dies ermöglicht ein besonders effizientes Durchführen eines Positionierverfahrens, mit dem die Aufhängung der Hängeware zwischen dem ersten Vorsprung 12 und dem zweiten Vorsprung 14 positionierbar ist, nachdem die Hängeware in Förderrichtung X vor dem zweiten Vorsprung 14 auf die Schiene aufgebracht wurde. Alternativ kann der zweite Vorsprung 14 aber auch im angebrachten Zustand vertikal, also im Wesentlichen parallel zur Anschlagsfläche 22 des ersten Vorsprungs 12 verlaufen.

Zwischen dem ersten Vorsprung 12 und dem zweiten Vorsprung 14 ist ein Streckenabschnitt einer Strecke T gebildet, der bevorzugt 15 mm bis 40 mm, besonders bevorzugt 20 mm, lang ist. Dieser Streckenabschnitt erstreckt sich dabei zwischen einer in Förderrichtung X vorderen Anschlagsoberfläche 22 des ersten Vorsprungs 12 und einer in Förderrichtung X hinteren Endfläche des zweiten Vorsprungs 14.

Im Bereich der Basis 26 zwischen dem ersten Vorsprung 12 und dem zweiten Vorsprung 14 befindet sich eine Ausnehmung 16. Diese Ausnehmung 16 ist dabei so bemessen und geformt, dass die Aufhängung der Hängeware innerhalb der Ausnehmung 16 nach oben von der Schiene entnommen werden kann, ohne an die Basis 26 oder einen anderen Teil des Förderelements 10 zu stoßen.

Hierfür ist eine erste Länge D1 des ersten Vorsprungs 12 von der Basis 26 senkrecht zur Förderrichtung X bevorzugt 35 mm. Eine zweite Länge D2, die sich von der Basis 26 zum unteren Ende der zweiten Spitze 30 des zweiten Vorsprungs 14 erstreckt, misst etwa 30 mm in der hier dargestellten bevorzugten Ausführungsform. Bevorzugt ist eine Längendifferenz ΔD zwischen der ersten Länge D1 und der zweiten Länge D2 vorgesehen, wobei der zweite Vorsprung 14 sich über eine kürzere Länge D2 von der Basis 26 aus erstreckt als der erste Vorsprung 12.

Die Längendifferenz ΔD ermöglicht es insbesondere, dass eine ähnliche Aufhängung der Hängeware an der in Förderrichtung X vorderen Anschlagsfläche 24 des zweiten Vorsprungs 14 vor sich hergeschoben wird, bis eine Ausnehmung für die Aufhängung in der Schiene, über welche die Aufhängung geschoben wird, erreicht wird. Die Aufhängung fällt in diese Ausnehmung hinein, wodurch der kürzere zweite Vorsprung 14 über die Aufhängung hinwegfährt. Die Ausnehmung ist dabei so dimensioniert und geformt, dass der erste Vorsprung 12 die Aufhängung erfasst und aus der Ausnehmung herausschieben kann. Ab diesem Moment ist die Aufhängung zwischen dem ersten Vorsprung 12 und dem zweiten Vorsprung 14 gefangen und nur durch gezielte Maßnahmen nach oben oder unten durch eine entsprechende separate oder in der Schiene ausgestaltete Entnahmevorrichtung von der Förderanlage zu entnehmen.

Alternativ und zusätzlich zu der Ausführungsform mit der Längendifferenz ΔD zwischen der ersten Länge D1 des ersten Vorsprungs 12 und der Länge D2 des zweiten Vorsprungs 14 zum leichten Aufnehmen der Hängeware zwischen dem ersten Vorsprung 12 und dem zweiten Vorsprung 14 ist es möglich, dass der zweite Vorsprung 14 elastisch oder gelenkig ausgebildet ist, so dass er die Hängeware auch ohne Ausnehmung in der Schiene überfahren und damit einfangen kann. Hierfür kann der zweite Vorsprung 14 wie in den vorliegenden Figuren abgebildet ausgestaltet sein, er kann aber auch andere Formen, insbesondere eine einfache, sich im Wesentlichen vertikal erstreckende Form aufweisen.

Oberhalb seiner Basis 26 weist das Förderelement 10 zwei mit jeweils einer Rastnase versehene Einführstifte 18 als männlicher Teil einer Steckverbindung auf. Über die Rastnasen der Einführstifte 18, durch welche das Förderelement in eine entsprechende Aufnahme in einem Förderträger oder einem Teil einer Förderkette eingeführt werden kann, ist es effizient möglich, das Förderelement an dem Förderträger o.ä. zu arretieren. Bevorzugt kann das Förderelement 10 dabei von dem Förderträger oder der Förderkette, die beide nicht gezeigt sind, gelöst werden. Dies kann beispielsweise dadurch erfolgen, dass die Einführstifte 18 elastisch aufeinander zu gebogen werden, so dass die Rastnasen außer Eingriff mit dem Förderträger kommen.

Weiter weist das in Fig. 1 gezeigte Förderelement 10 eine definierte Oberkantenkontur 20 auf. Die Oberkantenkontur 20 des Förderelements 10 fungiert je nach Ausgestaltung des entsprechenden Gegenstücks, insbesondere also eines Förderträgers, als Kodierung und als Stütze. Auf diese Weise kann das Förderelement 10 fehlerfrei und sicher an einem entsprechenden Förderträger angebracht werden.

Fig. 1 zeigt zudem, dass sich der erste Vorsprung 12 mit zunehmender Annäherung an die Basis 26 entlang der Förderrichtung X verbreitert. Ein Effekt dieser Ausgestaltung ist, dass sich der erste Vorsprung 12 dadurch besser gegen auf ihn einwirkendende Kräfte durch die zu fördernde Hängeware abstützen kann und somit eine höhere Stabilität des ersten Vorsprungs 12 erzielt werden kann.

Das Förderelement 10 kann einen RFID Chip oder ein ähnliches elektronisch auslesbares, oder ein optisch auslesbares, Identifikationsmittel aufweisen, um eine exakte Zielsteuerung und Positionsregelung des Förderelements 10 zu ermöglichen.

Grundsätzlich sind jedoch auch andere Ausgestaltungen der einzelnen Vorsprünge 12, 14 als in Fig. 1 gezeigt möglich. Insbesondere für den zweiten Vorsprung 14 ist alternativ möglich, diesen geradlinig vertikal und damit im Wesentlichen parallel zum ersten Vorsprung 12 auszuführen. Optional kann der zweite Vorsprung 14, insbesondere in der geradlinigen Ausgestaltung, gegen die Förderrichtung X elastisch oder über ein Gelenk beweglich sein, um Hängeware leicht in den Zwischenraum zwischen dem ersten Vorsprung 12 und dem zweiten Vorsprung 14 aufzunehmen, indem die Hängeware vom zweiten Vorsprung 14 überfahren und daher nicht vor sich her geschoben wird.

Fig. 2 zeigt eine Vorderansicht des Förderelements 10 aus Fig. 1. Zusätzlich zur Fig. 1 ist hier zu erkennen, dass sich der erste Vorsprung 12 von der Basis 26 in Richtung der ersten Spitze 28 quer zur Förderrichtung X durchgehend verjüngt. In vertikaler Richtung und parallel zur Förderrichtung X gesehen hat der erste Vorsprung 12 somit die Form eines Keils. Durch die Verbreiterung in Richtung der Basis 26, ausgehend von der ersten Spitze 28, wird eine erhöhte Stabilität beim Entnehmen der Aufhängung, beispielsweise in Form eines üblichen Bügels, aus dem Förderelement 10 erzielt. Dies erleichtert insbesondere ein vollautomatisches Entnehmen der Hängeware aus dem Förderelement 10 erheblich. Denn das Verbreitern des ersten Vorsprungs 12, insbesondere seiner ersten Anschlagsfläche 22, führt dazu, dass auch eine angehobene Aufhängung sich nicht ohne weiteres gegenüber dem Förderelement 10 um seine Hochachse verdrehen kann.

Fig. 2 zeigt, dass auch der zweite Vorsprung 14 sich von seiner Spitze 30 aus in Richtung der Basis 26 verbreitert; wiederum gesehen in Förderrichtung X, d.h. die Verbreiterung des zweiten Vorsprungs 14 hat wie die Verbreiterung des ersten Vorsprungs 12 zumindest eine Komponente quer zur Förderrichtung X oder ist vollständig quer zur Förderrichtung X ausgebildet.

Neben den Figuren 1, 3 und 4 zeigt insbesondere Fig. 5 besonders deutlich, dass die erste Anschlagsfläche 22 des ersten Vorsprungs 12 plan ausgestaltet ist. Die erste Anschlagsfläche 22 verläuft dabei in einer Ebene, die senkrecht zur Förderrichtung X verläuft.

Die Oberfläche des ersten Vorsprungs 12 umfasst in der dargestellten Ausführungsform auch noch zwei gegenüber der Anschlagsfläche 22 abgewinkelte Seitenflächen 25, die zur weiteren Stabilisierung der Aufhängung in ihrer von der Schiene angehobenen Stellung dienen können. Je nach Ausgestaltung der Aufhängung der zu fördernden Hängeware können diese Seitenflächen 25 auch anders ausgestaltet oder weggelassen werden. Dies gilt grundsätzlich auch für die Anschlagsflächen 23, 24 sowie für die Bemessung und Formung der Ausnehmung 16 und insbesondere des ersten Vorsprungs 12 und des zweiten Vorsprungs 14. In einer weiteren bevorzugten Ausführungsform weist der erste Vorsprung 12 eine breitflächige erste Anschlagsfläche 22, aber keine abgeschrägten Seitenflächen 25 im Sinne der in Fig. 5 dargestellten Ausführungsform auf. Stattdessen erfolgt ein jeweils etwa rechtwinkliger Übergang zwischen der ersten Anschlagsfläche 22 und zwei im Wesentlichen parallel zur Förderrichtung X ausgerichteten Seitenwangen.

Durch das in den Figuren gezeigte bevorzugte Förderelement können die Aufgaben der vorliegenden Erfindung besonders gut und vollständig gelöst werden. Insbesondere ist es möglich, durch das abgebildete Förderelement Hängeware über eine Schiene zu bewegen, wobei die Hängeware sowohl nach oben als auch nach unten aus der Hängewarenförderanlage entnommen und beispielsweise auf eine weiterführende Nebenschiene bewegt werden kann. Dieser Vorteil der Erfindung führt letztlich dazu, dass ein erfindungsgemäßes Förderelement, besonders bevorzugt das abgebildete Förderelement, eine für die Planung und Entwicklung einer vollautomatischen Hängewarenförderanlage sehr wertvolle Steigerung der Flexibilität im Einsatz des Förderelements ermöglicht.

## Patentansprüche

1. Hängewarenförderanlage mit einem Förderelement (10),
wobei die Hängewarenförderanlage dazu ausgestaltet ist, an einer Aufhängung auf einer Schiene hängende Hängeware entlang einer Förderrichtung (X) über die Schiene zu bewegen, wobei das Förderelement (10)
einen ersten Vorsprung (12) umfasst, durch den die Aufhängung der Hängeware an einer ersten Anschlagsfläche (22) kontaktierbar und über die Schiene mitnehmbar ist,
wobei der erste Vorsprung (12) so geformt und bemessen ist, dass die Aufhängung während eines Aufwärtsverschiebens der Aufhängung entlang zumindest eines Abschnitts der ersten Anschlagsfläche (22) an zumindest zwei horizontal beabstandeten Stellen an der ersten Anschlagsfläche (22) gleichzeitig kontaktierbar ist,
wobei der erste Vorsprung (12) von einer Basis (26) des Förderelements (10) aus bis zu einer ersten Spitze (28) um eine erste Länge (D1) vorsteht, die senkrecht zur Förderrichtung (X) definiert ist, wenn das Förderelement (10) an der Hängewarenförderanlage angebracht ist,
wobei das Förderelement (10) ferner einen zweiten Vorsprung (14) umfasst, der in Förderrichtung (X) vor dem ersten Vorsprung (12) angeordnet ist,
wobei der zweite Vorsprung (14) von der Basis (26) des Förderelements (10) aus bis zu einer zweiten Spitze (30) um eine zweite Länge (D2) vorsteht, die senkrecht zur Förderrichtung (X) definiert ist, wenn das Förderelement (10) an der Hängewarenförderanlage angebracht ist,
**dadurch gekennzeichnet, dass** die zweite Länge (D2) kürzer als die erste Länge (D1) ist,
wobei sich die erste Anschlagsfläche (22) in einem Abschnitt, in dem die Aufhängung während eines Aufwärtsverschiebens der Aufhängung entlang des Abschnitts der ersten Anschlagsfläche (22) an zumindest zwei horizontal beabstandeten Stellen an der ersten Anschlagsfläche (22) gleichzeitig kontaktierbar ist, verjüngt.

2. Hängewarenförderanlage nach Anspruch 1,
wobei sich der erste Vorsprung (12) von der Basis (26) des Förderelements (10) aus zur ersten Spitze (28) verjüngt, insbesondere sich durchgehend von der Basis (26) bis zur ersten Spitze (28) verjüngt.

3. Hängewarenförderanlage nach einem der vorhergehenden Ansprüche,
wobei die erste Anschlagsfläche (22) senkrecht zur Förderrichtung (X) ausgerichtet ist, wenn das Förderelement (10) an der Hängewarenförderanlage angebracht ist.

4. Hängewarenförderanlage nach einem der vorhergehenden Ansprüche,
wobei die erste Länge (D1) 30 mm bis 40 mm, bevorzugt 35 mm, beträgt.

5. Hängewarenförderanlage nach einem der vorhergehenden Ansprüche,
wobei die zweite Länge (D2) höchstens 30 mm, bevorzugt höchstens 25 mm, ist.

6. Hängewarenförderanlage nach einem der vorhergehenden Ansprüche,
wobei der zweite Vorsprung (14) in einem Bereich einer zweiten Spitze (30) mit der Förderrichtung (X) einen spitzen Winkel einschließt,
wobei der zweite Vorsprung (14) zumindest in dem Bereich der zweiten Spitze (30) an seiner in Förderrichtung (X) vorne liegenden Seite eine zweite Anschlagsfläche (24) aufweist.

7. Hängewarenförderanlage nach einem der vorhergehenden Ansprüche,
wobei das Förderelement (10) dazu ausgestaltet ist, lösbar, insbesondere mittels einer Steckverbindung (18), an einem Förderträger der Hängewarenförderanlage angebracht zu werden.

## Claims

1. Conveying system for suspended goods, having a conveying element (10),
wherein the conveying system for suspended goods is configured to move hanging suspended goods on a suspension on a rail along a conveying direction (X) via the rail, wherein the conveying element (10)
comprises a first projection (12) by means of which the suspension of the suspended goods is contactable at a first stop face (22) and can be carried along via the rail,
wherein the first projection (12) is formed and dimensioned so that, during an upward displacement of the suspension along at least one portion of the first stop face (22), the suspension is contactable at least at two horizontally spaced sites on the first stop face (22) simultaneously,
wherein the first projection (12) protrudes from a base (26) of the conveying element (10) as far as a first point (28) by a first length (D1) which is defined perpendicularly to the conveying direction (X), when the conveying element (10) is mounted on the conveying system for suspended goods,
wherein the conveying element (10) further comprises a second projection (14) which is arranged, in the conveying direction (X), in front of the first projection (12),
wherein the second projection (14) protrudes from the base (26) of the conveying element (10) as far as a second point (30) by a second length (D2) which is defined perpendicularly to the conveying direction (X), when the conveying element (10) is mounted on the conveying system for suspended goods,
**characterised in that** the second length (D2) is shorter than the first length (D1),
wherein the first stop face (22) tapers in a portion in which the suspension is contactable during an upward displacement of the suspension along the portion of the first stop face (22) at least at two horizontally spaced sites on the first stop face (22) simultaneously.

2. Conveying system for suspended goods according to claim 1,
wherein the first projection (12) tapers from the base (26) of the conveying element (10) to the first point (28), in particular continuously from the base (26) to the first point (28).

3. Conveying system for suspended goods according to one of the preceding claims,
wherein the first stop face (22) is oriented perpendicularly to the conveying element (X) when the conveying element (10) is mounted on the conveying system for suspended goods.

4. Conveying system for suspended goods according to one of the preceding claims,
wherein the first length (D1) is 30 mm to 40 mm, preferably 35 mm.

5. Conveying system for suspended goods according to one of the preceding claims,
wherein the second length (D2) is not more than 30 mm, preferably not more than 25 mm.

6. Conveying system for suspended goods according to one of the preceding claims,
wherein the second projection (14) encloses an acute angle, in a region of a second point (30), with the conveying device (X),
wherein at least in the region of the second point (30), the second projection (14) has a second stop face (24) on its side situated at the front in the conveying direction (X).

7. Conveying system for suspended goods according to one of the preceding claims,
wherein the conveying element (10) is configured to be mounted releasably, in particular, by means of a plug-in connection (18) on a conveyor carrier of the conveying system for suspended goods.

## Revendications

1. Installation de transport de marchandises suspendues comportant un élément de transport (10),
dans laquelle l'installation de transport de marchandises suspendues est conçue pour déplacer des marchandises suspendues, suspendues à une suspension sur un rail, le long d'une direction de transport (X) sur les rails, dans laquelle l'élément de transport (10)
comprend une première proéminence (12) par laquelle la suspension de la marchandise suspendue peut être mise en contact sur une première surface de butée (22) et peut être emportée sur les rails,
dans laquelle la première proéminence (12) est formée et dimensionnée de telle sorte que la suspension peut être mise en contact en même temps pendant un décalage vers le haut de la suspension le long d'au moins une section de la première surface de butée (22) sur au moins deux sites distants horizontalement sur la première surface de butée (22),
dans laquelle la première proéminence (12) dépasse d'une base (26) de l'élément de transport (10) jusqu'à une première pointe (28) d'une première longueur (D1) qui est définie perpendiculairement à la direction de transport (X), lorsque l'élément de transport (10) est monté sur l'installation de transport de marchandises suspendues,
dans laquelle l'élément de transport (10) comprend en outre une deuxième proéminence (14) qui est disposée en direction de transport (X) avant la première proéminence (12),
dans laquelle la deuxième proéminence (14) dépasse de la base (26) de l'élément de transport (10) jusqu'à une deuxième pointe (30) d'une deuxième longueur (D2) qui est définie perpendiculairement à la direction de transport (X), lorsque l'élément de transport (10) est monté sur l'installation de transport de marchandises suspendues,
**caractérisée en ce que** la deuxième longueur (D2) est plus courte que la première longueur (D1),
dans laquelle la première surface de butée (22) diminue dans une section dans laquelle la suspension peut être mise en contact en même temps pendant un décalage vers le haut de la suspension le long de la section de la première surface de butée (22) sur au moins deux sites distants horizontalement sur la première surface de butée (22).

2. Installation de transport de marchandises suspendues selon la revendication 1,
dans laquelle la première proéminence (12) diminue de la base (26) de l'élément de transport (10) jusqu'à la première pointe (28), en particulier diminue constamment de la base (26) jusqu'à la première pointe (28).

3. Installation de transport de marchandises suspendues selon l'une quelconque des revendications précédentes,
dans laquelle la première surface de butée (22) est orientée perpendiculairement à la direction de transport (X), lorsque l'élément de transport (10) est monté sur l'installation de transport de marchandises suspendues.

4. Installation de transport de marchandises suspendues selon l'une quelconque des revendications précédentes,
dans laquelle la première longueur (D1) est de 30 mm à 40 mm, de préférence de 35 mm.

5. Installation de transport de marchandises suspendues selon l'une quelconque des revendications précédentes,
dans laquelle la deuxième longueur (D2) est au plus de 30 mm, de préférence au plus de 25 mm.

6. Installation de transport de marchandises suspendues selon l'une quelconque des revendications précédentes,
dans laquelle la deuxième proéminence (14) forme un angle aigu avec la direction de transport (X) dans une zone d'une deuxième pointe (30),
dans laquelle la deuxième proéminence (14) présente au moins une deuxième surface de butée (24) dans la zone de la deuxième pointe (30) sur son côté avant dans la direction de transport (X).

7. Installation de transport de marchandises suspendues selon l'une quelconque des revendications précédentes,
dans laquelle l'élément de transport (10) est conçu pour être monté de façon à être détachable, en particulier au moyen d'une connexion par fiche (18), à un support de transport de l'installation de transport de marchandises suspendues.
